# FASCICULE DE BREVET EUROPEEN

(11) **EP 2 505 789 B1**
(45) Date de publication et mention de la délivrance du brevet: **28.12.2016**
(21) Numéro de dépôt: 11160524.2
(22) Date de dépôt: 30.03.2011
(51) Int. Cl.: F01D 25/02, F02C 7/047

(54) **Séparateur de flux gazeux avec dispositif de dégivrage par pont thermique**
Gasflussabscheider mit Enteisungsvorrichtung über Wärmebrücke
Gaseous flow separator with device for thermal-bridge defrosting

(43) Date de publication de la demande: 03.10.2012
(73) Titulaire: Safran Aero Boosters SA, 4041 Herstal (BE)
(72) Inventeur: Culot, Yves, 4000 Liège (BE); Strengnart, Marc, 4367 Fize-le-Marsal (BE); Stephany, Antoine, 4910 Theux (BE); Depaepe, David, 4000 Liège (BE); Cornet, Albert, 4800 Verviers (BE); Raimarckers, Nicolas, 4263 Tourinne (Braives) (BE); Broers, Georges, 3730 Hoeselt (BE); Bajusz, Denis, Remicourt (BE)
(74) Mandataire: Lecomte & Partners

(56) Documents cités:
- EP-A1- 1 046 784
- EP-A1- 2 075 194
- WO-A2-2010/086560

## Description

### Domaine technique

L'invention a trait au problème de l'accrétion de glace sur les surfaces de séparation de flux gazeux, comme par exemple de l'air, en un premier flux et en un deuxième flux. Ce type de séparateur se retrouve notamment dans les compresseurs d'entrée de turbomachine axiale à double flux. En effet, dans ce type de machine, le flux d'air d'entrée est séparé en un flux primaire et un flux secondaire. Le flux primaire, de section généralement annulaire, va traverser les différents étages de compression de la machine, la chambre de combustion et la turbine. Le flux secondaire, de section généralement annulaire de plus grand diamètre que le flux primaire et concentrique avec ce dernier, est comprimé par la soufflante et les redresseurs du flux secondaire et rejoint ensuite le flux primaire pour participer à la poussée.

### Technique antérieure

Le flux secondaire séparé du flux d'air principal après passage au travers de la soufflante (ou « fan ») d'entrée peut givrer sur les bords d'attaque des surfaces de guidage de la veine fluide secondaire. En effet, cette veine fluide ne subit pas d'échauffement et les parois la délimitant sont relativement éloignées des sources chaudes de la machine. Dans certaines conditions (air chargé froid chargé en humidité), l'air peut contenir des gouttelettes d'eau en surfusion qui se solidifient au contact des bords d'attaque, ceux-ci formant alors une surface d'accrétion pour la formation de givre. Ce phénomène est particulièrement courant au niveau du bec de séparation des flux primaire et secondaire, plus précisément au niveau du bord d'attaque et de la paroi délimitant le flux secondaire à proximité du bord d'attaque.

Le document de brevet US 2003/0035719 A1 aborde cette problématique de givrage du bord d'attaque du bec de séparation. La solution proposée consiste à prévoir un jeu au niveau de l'engagement mécanique entre le bord d'attaque et la paroi délimitant le flux primaire, et à injecter un flux d'air chaud dans la cavité formée par le bec de séparation. Grâce au jeu en question, l'air chaud peut circuler le long de l'engagement mécanique au niveau du bord d'attaque et s'échapper. Cette circulation assure un apport d'énergie thermique à proximité du bord d'attaque. Une alternative consiste à prévoir une paroi supplémentaire au niveau de la veine du flux secondaire. Le bec est conçu de manière à ce que le flux d'air chaud s'échappe également vers la paroi supplémentaire. Le flux d'air chaud provient du compresseur haute-pression. La solution proposée par cet enseignement présente deux inconvénients majeurs, à savoir la complexité du dispositif d'amenée du flux d'air chaud ainsi que la perte de rendement liée à ce débit de fuite (énergie apportée pour comprimer un débit d'air ne participant pas à la poussée).

Le document de brevet GB 2 406 142 A aborde également le problème de givrage du bord d'attaque et de la première rangée d'aubes statoriques. La solution proposée consiste à prévoir un caloduc (« heat pipe ») reliant une source chaude disposée plus en aval dans la machine avec le bec de séparation. Bien que la conductivité thermique équivalente d'un caloduc soit élevée, notamment en comparaison avec un matériau comme le cuivre, cette solution n'est reste pas moins coûteuse et complexe dans la mesure où un certain nombre de caloducs répartis sur la circonférence du bec de séparation est nécessaire pour assurer un dégivrage efficace.

Le document de brevet EP 2 075 194 A1 a trait à un échangeur de chaleur air-huile disposé au niveau du bec de séparation sur et à proximité du bord d'attaque. La présence de l'échangeur à proximité du bord d'attaque présente le double avantage de constituer une source chaude empêchant le givrage et de présenter un rendement d'échange thermique élevé. Elle présente cependant l'inconvénient de constituer une solution techniquement complexe. Cette solution présente par ailleurs un risque non négligeable d'endommagement de l'échangeur et de fuites d'huile en cas d'avalement par la machine d'un corps étranger, en raison de la position très avancée de l'échangeur.

Le document de brevet EP1895 141 A2 a trait également à un échangeur de chaleur air-huile disposé au niveau du bec de séparation à proximité du bord d'attaque. La partie extrême avant du bec de séparation comporte un volume intérieur formant avec les parois du bec une chambre parcourue par du lubrifiant en vue de son refroidissement. Cette disposition empêche la formation de givre en raison de l'apport de calorifique du lubrifiant. Similairement au document précédent, cette disposition est techniquement complexe et susceptible d'occasionner des pannes, notamment par fuite du lubrifiant, en cas d'avalement par la machine d'un corps étranger.

Le document de brevet WO 2010/086560 A2 divulgue une nacelle d'aéronef avec un séparateur du flux gazeux la traversant. Le séparateur comprend un bord d'attaque en forme de lèvre de forme généralement annulaire, avec une chambre délimitée par la face intérieure de la lèvre et une paroi. Un flux d'air chaud alimente la chambre annulaire en vue d'assurer un dégivrage de la lèvre.

### Résumé de l'invention

L'invention a pour objet de proposer une solution à au moins un des problèmes sus mentionnés, plus particulièrement de proposer une solution simple, économique et fiable au problème de givrage de la partie avant (ou amont) du séparateur de flux gazeux.

L'invention consiste en un séparateur selon la revendication 1.

Cette solution est particulièrement avantageuse car elle permet d'assurer un pont thermique entre la partie du séparateur qui est le plus sujette au phénomène de givrage, avec un échangeur de chaleur formant une source chaude disposée en retrait de cette zone. Le pont thermique est réalisé de manière très simple et efficace. L'assemblage du séparateur est simple et est peu susceptible de générer des pannes en cas d'impact avec des corps étrangers. L'utilisation d'un échangeur de chaleur disposé de manière adjacente à la paroi de guidage en guise de source de chaleur est particulièrement intéressante tant d'un point de vue simplicité de construction que d'un point de vue fiabilité. Elle permet en outre d'utiliser à bon escient des calories qui doivent être de toute façon évacuées.

Selon un mode avantageux de l'invention, le contact entre la lame métallique et le bord d'attaque est assuré par insertion de ladite lame dans une fente à l'arrière du bord d'attaque. Cette mesure rend le montage particulièrement simple. De plus, ce montage assure une conduction thermique satisfaisante.

Selon un autre mode avantageux de l'invention, le séparateur comprend une paroi de guidage du flux primaire, et la lame métallique est en contact avec ladite paroi de guidage. Ce double contact de la lame permet d'assurer une liaison thermique avec la paroi, ce qui garantit un apport de chaleur non seulement au bord d'attaque mais également à la paroi. La paroi est préférentiellement en contact direct avec le bord d'attaque. La paroi est préférentiellement unitaire ou venue de matière avec le bord d'attaque. La paroi peut être constituée notamment de plateformes d'aubes statoriques.

Avantageusement la lame pourrait présenter une ou plusieurs liaisons sous forme de patte, notamment à partir de sa partie centrale vers des éléments du bec comme par exemple la paroi de guidage d'un des flux primaire et secondaire ou encore les plateformes de la première rangée d'aubes statoriques. En effet, si l'on désire amener des calories à plusieurs points de la virole, il est envisageable de prévoir une ou plusieurs liaisons depuis la partie avant ou la partie centrale de la lame vers ces points.

Selon un encore autre mode avantageux de l'invention, la lame métallique est maintenue en place par fixation de sa partie arrière à la paroi de guidage du flux secondaire. Cette mesure présente l'avantage additionnel que la liaison thermique de la lame avec la paroi est assurée directement par sa liaison mécanique.

Selon un encore autre mode avantageux de l'invention, la lame métallique s'étend majoritairement le long de la paroi de guidage, préférentiellement avec un matériau isolant disposé entre la paroi de guidage et la lame métallique. Le séparateur peut être un séparateur de flux entre le flux primaire et le flux secondaire d'une turbomachine axiale. Dans ce cas, la paroi de guidage peut notamment guider le flux primaire et être constituée de plates-formes de fixations d'aubes statoriques. La lame peut alors s'étendre majoritaire le long de ces plates-formes, préférentiellement avec contact, de manière à assurer un dégivrage des aubes.

Selon un encore autre mode avantageux de l'invention, la lame métallique est d'un seul tenant avec le bord d'attaque et la paroi de guidage est fixée à la lame par le matériau isolant. Ce mode de réalisation est particulièrement intéressant lorsque le séparateur est un séparateur de flux entre le flux primaire et le flux secondaire d'une turbomachine axiale. Plus particulièrement, la paroi de guidage peut notamment guider le flux secondaire et être supportée par la lame.

Selon un encore autre mode avantageux de l'invention, la lame métallique présente une partie avant rectiligne et une partie arrière rectiligne. La forme en « S » permet de compenser les dilations thermiques différentielles entre la lame et le séparateur.

Selon un encore autre mode avantageux de l'invention, le bec de séparation comprend une paroi de guidage du flux secondaire, et la lame métallique est en contact avec une extrémité arrière de ladite paroi. La paroi de guidage est préférentiellement en contact direct avec le bord d'attaque. La paroi de guidage est préférentiellement unitaire ou venue de matière avec le bord d'attaque.

Selon un encore autre mode avantageux de l'invention, la paroi de guidage, l'échangeur de chaleur et la lame métallique forment un assemblage superposé. Il en résulte un montage aisé et rapide.

Selon un encore autre mode avantageux de l'invention, la lame métallique comporte au moins un élément à filetage femelle destiné à coopérer avec une vis traversant l'assemblage superposé. Le montage en est d'avantage simplifié.

Selon un encore autre mode avantageux de l'invention, la lame métallique présente une section transversale approximativement circulaire.

Selon un encore autre mode avantageux de l'invention, le dispositif de dégivrage comprend une pluralité de lames présentant chacune une section transversale approximativement en arc de cercle.

L'invention consiste également en un compresseur de turbomachine axiale à double flux comprenant un séparateur du flux d'air en flux primaire et en flux secondaire, le séparateur étant conforme au séparateur décrit ci-avant.

L'invention consiste également en une turbomachine axiale à double flux comprenant un compresseur basse-pression conforme à celui décrit ci-avant.

### Brève description des dessins

La figure 1 est une vue générale en coupe d'un turboréacteur situant l'emplacement du bec de séparation du flux selon l'invention.
La figure 2 est une vue en coupe de la partie référencée 22 du turboréacteur de la figure 1 montrant, entre autres, le bec de séparation selon l'invention qui comprend une paroi équipée d'échangeurs air-huile. La figure 2 comprend également une vue agrandie de la partie avant du bec de séparation.
La figure 3 est une vue en coupe d'une première variante du séparateur de flux de la figure 2, conforme à l'invention.
La figure 4 est une vue en coupe d'une deuxième variante du séparateur de flux de la figure 2, conforme à l'invention.
La figure 5 est une vue en coupe d'une troisième variante du séparateur de flux de la figure 2, conforme à l'invention.

### Description des modes de réalisation

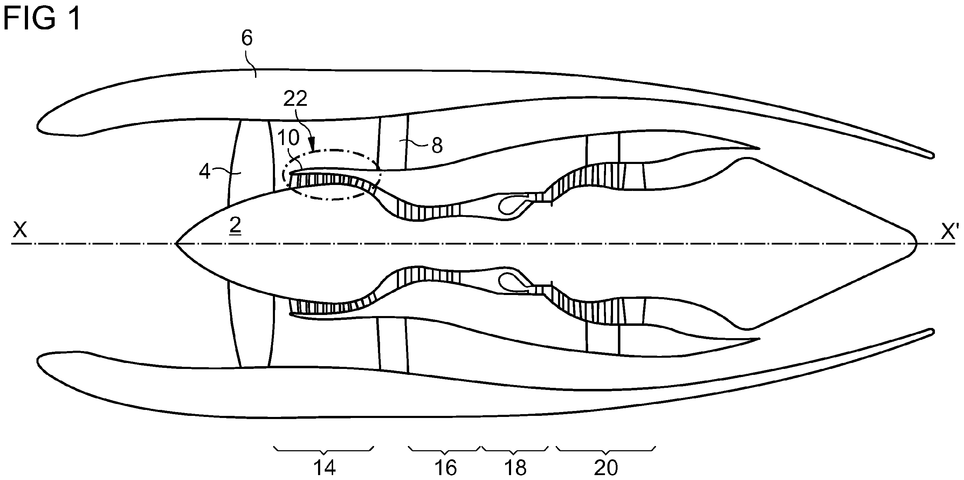

Un turboréacteur double-flux est illustré schématiquement en coupe à la figure 1. On peut y identifier les principaux éléments, à savoir la nacelle 6 servant d'enveloppe extérieure aux différents organes, le rotor 2 tournant autour de l'axe X-X' de la machine et la soufflante 4 supportée par le rotor 2.

Dans la description qui va suivre, les termes « amont » et « aval » se rapportent à des positions axiales le long de l'axe X-X' dans le sens de l'écoulement du flux d'air traversant le turboréacteur. Il en va de même pour les termes « avant » et « arrière », où « avant » correspond à « amont » et « arrière » correspond à « aval ».

Les termes « interne » ou « intérieur » et « externe » ou « extérieur » se rapportent à des positions radiales par rapport à l'axe X-X' de la turbomachine, « externe » ou « extérieur » signifiant une position plus éloignée de l'axe en question et, « interne » ou « intérieur » signifiant une position plus proche de l'axe.

En aval de la soufflante 4, le flux d'air est séparé par le bec de séparation 10 en un flux d'air primaire et un flux d'air secondaire. Le flux d'air primaire parcourt un passage d'air annulaire interne ou veine primaire en pénétrant dans le compresseur basse pression. Le flux d'air secondaire est dévié par le bec de séparation 10 dans un passage d'air annulaire externe ou veine secondaire. Le turboréacteur comprend une série de groupes fonctionnels : la soufflante 4, le compresseur basse pression 14, le compresseur haute pression 16, la chambre de combustion 18 et la turbine 20. Des bras de maintien 8 assurent une liaison mécanique entre la nacelle et la partie centrale comprenant le rotor et les différents étages. Le bec de séparation comprend une paroi délimitant la partie interne ou intérieure de la veine secondaire.

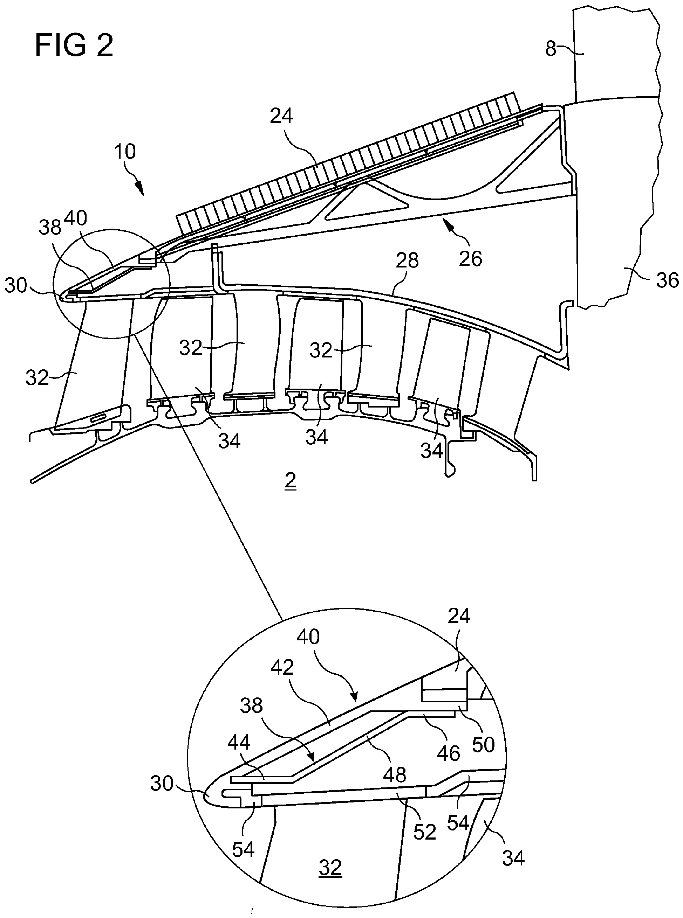

La figure 2 est une vue en coupe du bec de séparation s'étendant depuis le bord d'attaque 30 jusqu'aux bras de maintien 8. Elle illustre également la partie du compresseur basse pression correspondante. Le bec de séparation 10 assure la séparation du flux d'air généré par la soufflante entre la veine primaire traversant le compresseur basse pression et la veine secondaire. La veine primaire est délimitée par l'enveloppe du rotor 2 et le carter 28. Les aubes mobiles ou rotoriques 34 sont supportées par le rotor 2 et les aubes fixes ou statoriques 32 sont supportées par la paroi intérieure du bec de séparation 10 et le carter 28. La paroi extérieure du bec de séparation est constituée essentiellement d'un échangeur de chaleur surfacique air-huile 24, d'un bras support 26 et d'une virole 40 formant le bord d'attaque 30 et le début de la paroi interne délimitant la veine primaire. Le bras support 26 est fixé au carter intermédiaire 36 qui est lui-même rigidement fixé à la nacelle par les bras de maintien 8. Le carter intermédiaire constitue donc une partie de la machine particulièrement robuste et rigide. Le bras support s'étend depuis le carter intermédiaire 36 vers la virole 40. Il s'agit d'une structure généralement triangulaire supportant l'échangeur de chaleur 24. Ce dernier comprend une plaque formant la paroi et pourvue d'un ou plusieurs canaux d'huile à refroidir. La plaque est pourvue d'ailettes de refroidissement sur sa face extérieure. L'échangeur de chaleur est généralement courbé de manière à constituer un segment annulaire de la paroi. Alternativement, il peut comporter une série de facettes généralement planes ou légèrement courbées et formant un angle les unes par rapport aux autres de manière à former une forme généralement courbe.

Différents éléments mécaniques ou électriques d'une turbomachine doivent être lubrifiés et/ou refroidis, comme par exemple certains roulements, certains réducteurs et les machines électriques. Pour ce faire, un circuit de lubrification est prévu. L'huile joue le rôle de lubrifiant et également de fluide caloporteur, ce qui nécessite de prévoir une évacuation de la chaleur ainsi récoltée via un échangeur de chaleur.

Afin de minimiser les perturbations aérodynamiques, des échangeurs de chaleur dits surfaciques sont développés. Ils remplacent une paroi en contact avec une circulation d'air afin de présenter une surface d'échange thermique entre le fluide caloporteur comme par exemple l'huile du circuit de lubrification et l'air (source froide).

La virole 40 du bec de séparation 10 contient une lame métallique 38 destinée à assurer un dégivrage de la virole, plus particulièrement de son bord d'attaque 30. En effet, la lame métallique 38 constitue un pont thermique entre le bord d'attaque 30 et la source chaude que constitue l'échangeur de chaleur 24. La partie avant 44 de la lame métallique 38 est insérée dans une fente correspondante à l'intérieur du bec, à proximité du bord d'attaque 30. La partie avant de la paroi de guidage du flux primaire 54 est également insérée dans une fente correspondante à l'intérieure du bec. La paroi 54 sert de support à la première rangée d'aubes statoriques 32 où leurs plateformes 52 sont disposées et fixées par soudure ou par tout autre moyen sur ladite paroi. La partie arrière 46 de la lame métallique 38 est fixée par serrage mécanique (non illustré) à l'extrémité arrière 50 de la paroi 42. La lame métallique 38 est maintenue uniquement par ses parties avant 44 et arrière 46, libre de tout contact avec d'autres éléments du bec de manière à assurer une liaison thermique optimisée entre la source chaude et le bord d'attaque 30. Elle présente une section longitudinale en forme générale de « S », où sa partie avant 44 et sa partie arrière 46 sont de section généralement rectiligne et sont préférentiellement parallèles l'une à l'autre. La partie centrale de la lame métallique 48 est de section longitudinale également généralement rectiligne. Elle peut cependant présenter toutes sortes de formes, notamment de manière à contourner d'éventuels obstacles présents dans la cavité de la virole 40 du bec de séparation 10. La forme générale en « S » présente l'avantage de pouvoir compenser par déformation les dilations qu'engendrent les variations de températures. Cette forme est également particulièrement simple à mettre en oeuvre, tant du point de vue mise à forme que du point de vue montage. La liaison de la partie avant 44 de lame par insertion dans une fente correspondante de la face interne du bord d'attaque participe également à la simplicité de montage ainsi qu'à une compensation des dilatations de la lame 38 par rapport à la virole 40.

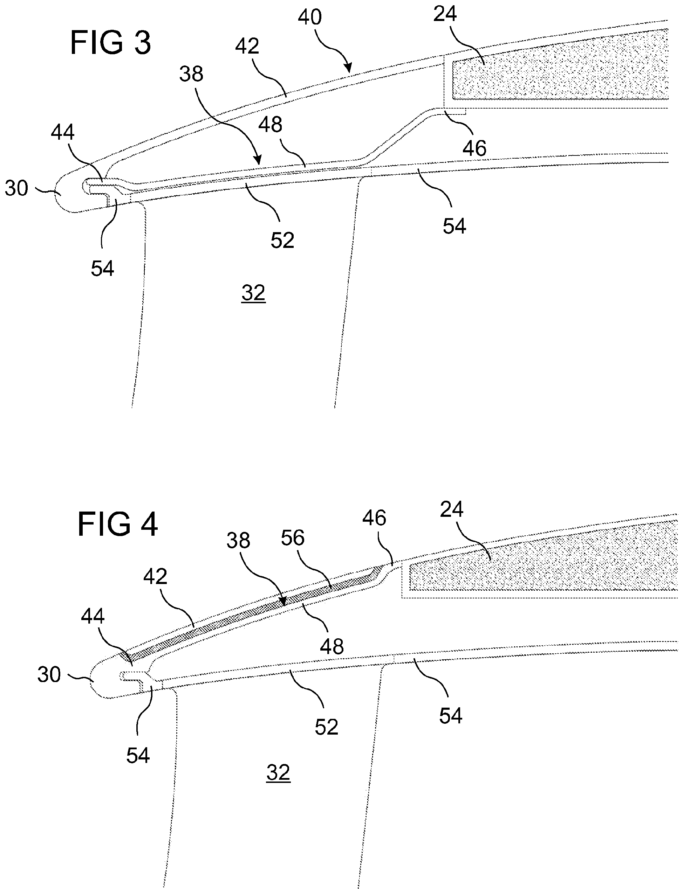

La figure 3 illustre une première variante au séparateur de flux décrit ci-avant. La source chaude 24 y est représentée de manière schématique. Elle peut, tout comme pour le séparateur de la figure 2, comprendre un échangeur de chaleur notamment surfacique, notamment du type ACOC (« Air Cooled Oil Cooler »). La lame métallique présente un profil différent de celui de la figure 2. En effet, sa partie centrale 48, bien que généralement rectiligne comme la précédente, est dans une position de contact continu avec la plateforme 52 d'une aube de la première rangée d'aubes statoriques. Ce contact permet, outre l'apport de calorie vers le bord d'attaque, un apport de calorie également vers la première rangée d'aubes statoriques, plus particulièrement vers leurs plateformes. Le contact entre la lame et la plateforme 52 peut être un simple contact libre ou encore via un ou plusieurs ponts thermiques réalisés entre la lame et la plateforme. Il est à noter que la lame, en fonction de sa largeur dans le sens circonférentiel du bec de séparation, peut couvrir plusieurs plateformes consécutives (dans le sens circonférentiel). La paroi 54 peut également présenter des zones de raccordement (non visibles sur la figure) entre les plateformes, si bien que la lame peut également couvrir et être en contact avec une ou plusieurs de ces zones.

La figure 4 illustre une deuxième variante au séparateur de flux décrit en relation avec la figure 2. Tout comme pour la première variante décrite ci-avant, la source chaude 24 y est représentée de manière schématique. Elle peut, tout comme pour le séparateur de la figure 2, comprendre un échangeur de chaleur notamment surfacique, notamment du type ACOC (« Air Cooled Oil Cooler »). La lame 38 est ici d'une seule pièce avec le bord d'attaque 30 et sa partie centrale généralement rectiligne 48 s'étend parallèlement à la paroi 42. Cette dernière est d'ailleurs supportée par la lame métallique 38 via une couche de matériau isolant 56. De la sorte, les calories transmises par la source chaude 24 sont majoritairement amenées vers le bord d'attaque 30. La paroi 42 assure une protection de l'isolant et ce dernier assure une conduction optimale de calories de la source chaude vers l'avant du bec de séparation.

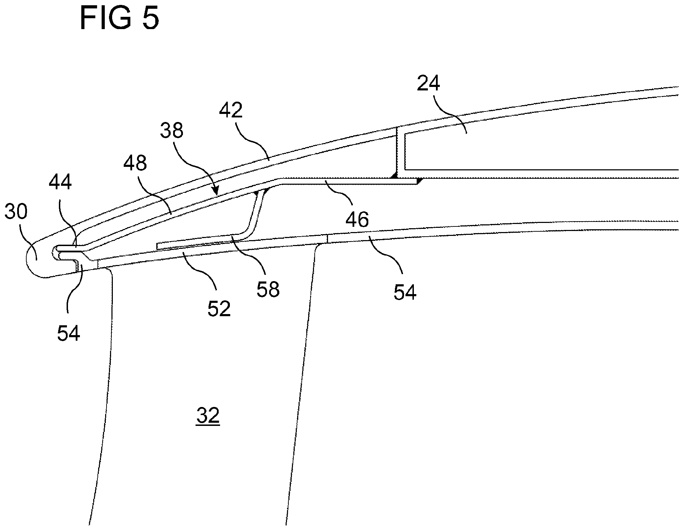

La figure 5 illustre une troisième variante au séparateur de flux décrit en relation avec la figure 2. Tout comme pour les première et deuxième variantes décrites ci-avant, la source chaude 24 y est représentée de manière schématique. Elle peut, tout comme pour le séparateur de la figure 2, comprendre un échangeur de chaleur notamment surfacique, notamment du type ACOC (« Air Cooled Oil Cooler »). La lame présente une liaison ou patte 58 à partir de sa partie centrale 48, vers des éléments de la partie avant de la paroi de guidage du flux primaire, comme les plateformes 52 de la première rangée d'aubes statoriques 32. Si l'on désire amener des calories à plusieurs points de la virole, il est envisageable de prévoir une ou plusieurs liaisons depuis la partie avant 44 ou la partie centrale 48 de la lame vers ces points. La forme de la lame est particulièrement intéressante dans cette logique d'apport de calorie en vue d'un dégivrage car elle confère une assez grande liberté pour le concepteur du bec, plus particulièrement de la virole formant la partie avant du bec.

De manière générale, la lame est préférentiellement en matériau métallique bon conducteur de chaleur comme par exemple de l'aluminium. La virole 40 est typiquement en aluminium. Etant donné que la lame 38 a en principe pour seule fonction d'assurer un pont thermique, elle peut être réalisée en une nuance d'aluminium différente de celle de la virole 40 qui, elle, est soumise à des contraintes mécaniques plus importantes. La lame 38 est préférentiellement mise à forme par pliage. Sa partie centrale 48 peut présenter un revêtement isolant afin de diminuer les pertes de chaleur au sein de la cavité de la virole par convection et aussi par rayonnement.

En référence à la figure 2, et s'appliquant également aux figures 3, 4 et 5, la paroi 42 délimitant la veine du flux secondaire présente une extrémité arrière avec un épaulement destiné à recevoir le bord avant de l'échangeur de chaleur 24. Bien que non illustrée en détail, la liaison peut être la suivante : l'extrémité avant de l'échangeur de chaleur, l'extrémité arrière 50 de la paroi 42 et la partie arrière 46 de la lame 38 constituent un empilement et comportent un ou plusieurs perçage selon une direction généralement radiale du rotor, destinés à recevoir un moyen de fixation traversant assurant une mise en pression de cet empilement, comme par exemple un vis. La partie arrière 46 de la lame 38 peut comporter des moyens de retenue d'un écrou de sorte que la fixation de l'assemblage de la virole 40, de la lame 38 et de l'échangeur de chaleur 24 s'opère par la mise en place et le serrage de vis depuis le canal de la veine fluide du flux secondaire.

Il est à noter que la lame présente de manière préférentielle une section transversale généralement circulaire conforme à la section correspondante de la virole. La lame peut former un cercle complet fermé ou ouvert. Elle peut également être constituée d'une série de sections en arc de cercle disposées de manière jointive ou encore à distance les unes des autres. En fonction de divers paramètres, il peut ne pas être nécessaire de prévoir le pont thermique formé par la lame de manière continue sur toute la circonférence de la virole.

Il est également à noter que la source chaude peut être autre qu'un échangeur de chaleur. En effet, on pourrait prévoir que la partie arrière de la lame soit en contact avec, par exemple, une conduite d'huile du circuit de lubrification de la turbomachine.

Il est également à noter que la lame peut s'étendre vers l'arrière au-delà de l'extrémité arrière de la paroi 42 de la virole. En effet, il se peut que la source chaude ne soit pas disponible directement au niveau de la liaison de la virole avec la partie arrière du bec de séparation (lorsqu'il n'y a pas d'échangeur à ce niveau) mais bien d'avantage en retrait. Dans ce cas, la lame présentera une longueur telle qu'elle formera une excroissance. Dans une telle situation, elle ne doit pas nécessairement être fixée à la paroi 42 car il peut être souhaitable qu'elle assure un pont thermique exclusif pour l'extrémité avant de la virole 40 ou encore son bord d'attaque 30.

Il est également à noter que la liaison entre la partie avant 44 de la lame et le virole ne doit pas nécessairement être du type à insertion libre ou coulissante dans une fente. En effet, pour notamment des raisons de conduction thermique et/ou de stabilité de montage, il peut être nécessaire de prévoir un léger serrage ou un complément de fixation par vissage, notamment depuis la paroi extérieure délimitant la veine fluide du flux secondaire ou depuis la paroi intérieure délimitant la veine fluide du flux primaire. La liaison de la partie avant de la lame peut également être assurée exclusivement par vissage tel que décrit ci-avant. En tout état de cause, même si la partie avant de la lame est fixée à la virole sans possibilité de translation, la forme en « S » de celle-ci permettra de compenser les dilations thermiques différentielles entre la lame et la virole.

Il est également à noter que la description des modes de réalisation de l'invention, qui a été faite ci-avant en application à une turbomachine axiale double flux, peut s'appliquer également à d'autres applications où un flux principal est séparé en un premier flux et un deuxième flux. Dans ce cas, le premier flux correspond au flux primaire de la turbomachine axiale double flux et le deuxième flux correspond au flux secondaire de ladite machine.

## Revendications

1. Séparateur comprenant un bec de séparation d'un flux gazeux d'une turbomachine axiale du type double flux, apte à séparer le flux gazeux en un flux primaire et un flux secondaire de la turbomachine, le séparateur comprenant :
un bord d'attaque (30) du séparateur;
un dispositif de dégivrage du bord d'attaque ;
un échangeur de chaleur surfacique (24) ; et
une paroi de guidage (42) du flux secondaire ;
**caractérisé en ce que**
l'échangeur de chaleur surfacique (24) est dans le prolongement de la paroi de guidage (42) du flux secondaire, et le dispositif de dégivrage comprend au moins une lame métallique (38) en contact thermique avec le bord d'attaque (30) et s'étendant depuis le bord d'attaque vers une partie arrière du séparateur à distance du bord d'attaque (30), en contact thermique avec l'échangeur de chaleur (24) formant une source chaude disposée à distance du bord d'attaque, la lame métallique (38) présentant une section longitudinale de forme générale en « S ».

2. Séparateur selon la revendication 1, **caractérisé en ce que** le contact thermique entre la lame métallique (38) et le bord d'attaque (30) est assuré par insertion de ladite lame dans une fente à l'intérieur du séparateur à proximité du bord d'attaque.

3. Séparateur selon l'une des revendications 1 et 2, **caractérisé en ce que** le séparateur comprend une paroi de guidage (52, 54) du flux primaire, et la lame métallique (38) est en contact avec une des parois de guidage (42, 52, 54) des flux primaire et secondaire, respectivement.

4. Séparateur selon les revendications 2 et 3, **caractérisé en ce que** la lame métallique (38) est maintenue en place par fixation de sa partie arrière (46) à la paroi de guidage du flux secondaire (42).

5. Séparateur selon l'une des revendications 1 à 3, **caractérisé en ce que** la lame métallique (38) s'étend majoritairement le long de la paroi de guidage du flux secondaire (42), préférentiellement avec un matériau isolant (56) disposé entre la paroi de guidage (42) et la lame métallique (38).

6. Séparateur selon la revendication 5, **caractérisé en ce que** la lame métallique (38) est d'un seul tenant avec le bord d'attaque (30) et **en ce que** la paroi de guidage du flux secondaire (42) est fixée à la lame par le matériau isolant (56).

7. Séparateur selon l'une des revendications 1 à 6, **caractérisé en ce que** la lame métallique (38) présente une partie avant rectiligne et une partie arrière rectiligne.

8. Séparateur selon l'une des revendications 1 à 7, **caractérisé en ce que** la lame métallique (38) est en contact avec une extrémité arrière de la paroi de guidage du flux secondaire (42).

9. Séparateur selon l'une des revendications 1 à 8, **caractérisé en ce que** l'extrémité arrière 50 de la paroi de guidage du flux secondaire (42), l'extrémité avant de l'échangeur de chaleur (24) et la partie arrière 46 de la lame métallique 38 forment un assemblage superposé.

10. Séparateur selon la revendication 9, **caractérisé en ce que** la lame métallique (38) comporte au moins un élément à filetage femelle destiné à coopérer avec une vis traversant l'assemblage superposé.

11. Séparateur selon l'une des revendications 1 à 10, **caractérisé en ce que** la lame métallique (38) présente une section transversale approximativement circulaire ou **en ce que** le dispositif de dégivrage comprend une pluralité de lames présentant chacune une section transversale approximativement en arc de cercle.

12. Compresseur de turbomachine axiale à double flux comprenant un séparateur du flux d'air en flux primaire et en flux secondaire, le séparateur étant conforme à l'une des revendications 1 à 11.

## Patentansprüche

1. Strömungsteiler mit einer Trennkante für die Trennung eines gasförmigen Stroms einer axialen Turbomaschine vom Doppelstromtyp, der in der Lage ist, den gasförmigen Strom in einen Primärstrom und einen Sekundärstrom der Turbomaschine zu trennen, wobei der Strömungsteiler Folgendes beinhaltet:
eine Vorderkante (30) des Strömungsteilers;
eine Vorrichtung für das Enteisen der Vorderkante;
einen Oberflächenwärmetauscher (24) und
eine Führungswandung (42) für den Sekundärstrom;
**dadurch gekennzeichnet, dass**:
der Oberflächenwärmetauscher (24) in der Verlängerung der Führungswandung (42) des Sekundärstroms angeordnet ist und die Enteisungsvorrichtung mindestens einen Metallstreifen (38) beinhaltet, der in thermischem Kontakt mit der Vorderkante (30) steht und sich ab der Vorderkante in Richtung auf einen hinteren Teil des Strömungsteilers in einigem Abstand von der Vorderkante (30) erstreckt, wobei er in thermischem Kontakt mit dem Wärmetauscher (24) steht, der eine Wärmequelle bildet, die in einiger Entfernung von der Vorderkante angeordnet ist, wobei der Metallstreifen (38) einen Längsquerschnitt aufweist, der allgemein "S"-förmig ist.

2. Strömungsteiler nach Anspruch 1, **dadurch gekennzeichnet, dass** der thermische Kontakt zwischen dem Metallstreifen (38) und der Vorderkante (30) durch Einfügen des genannten Streifens in einen Schlitz im Inneren des Strömungsteilers in der Nähe der Vorderkante gewährleistet wird.

3. Strömungsteiler nach einem der Ansprüche 1 und 2, **dadurch gekennzeichnet, dass** der Strömungsteiler eine Führungswand (52, 54) des Primärstroms beinhaltet und der Metallstreifen (38) jeweils mit einer der Führungswandungen (42, 53, 54) der Primär- und Sekundärströme in Kontakt steht.

4. Strömungsteiler nach einem der Ansprüche 2 und 3, **dadurch gekennzeichnet, dass** der Metallstreifen (38) durch Befestigung seines hinteren Teils (46) an der Führungswandung des Sekundärstroms (42) an Ort und Stelle gehalten wird.

5. Strömungsteiler nach einem der Ansprüche 1 bis 3, **dadurch gekennzeichnet, dass** sich der Metallstreifen (38) überwiegend entlang der Führungswandung des Sekundärstroms (42) erstreckt, vorzugsweise mit einem isolierenden Material, das zwischen der Führungswandung (42) und dem Metallstreifen (38) angeordnet ist.

6. Strömungsteiler nach Anspruch 5, **dadurch gekennzeichnet, dass** der Metallstreifen (38) mit der Vorderkante (30) ein einziges Stück bildet und die Führungswandung des Sekundärstroms (42) anhand des isolierenden Materials (56) an dem Streifen befestigt ist.

7. Strömungsteiler nach einem der Ansprüche 1 bis 6, **dadurch gekennzeichnet, dass** der Metallstreifen (38) einen geradlinigen vorderen Teil und einen geradlinigen hinteren Teil aufweist.

8. Strömungsteiler nach einem der Ansprüche 1 bis 7, **dadurch gekennzeichnet, dass** der Metallstreifen (38) in Kontakt mit einem hinteren Ende der Führungswandung des Sekundärstroms (42) steht.

9. Strömungsteiler nach einem der Ansprüche 1 bis 8, **dadurch gekennzeichnet, dass** das hintere Ende 50 der Führungswandung des Sekundärstroms (42), das vordere Ende des Wärmetauschers (24) und der hintere Teil (46) des Metallstreifens 38 eine übereinanderliegende Baugruppe bilden.

10. Strömungsteiler nach Anspruch 9, **dadurch gekennzeichnet, dass** der Metallstreifen (38) mindestens ein Element mit Innengewinde aufweist, das dazu bestimmt ist, um mit einer Schraube zusammenzuwirken, die die übereinanderliegende Baugruppe durchquert.

11. Strömungsteiler nach einem der Ansprüche 1 bis 10, **dadurch gekennzeichnet, dass** der Metallstreifen (38) einen annähernd runden Querschnitt aufweist, oder die Enteisungsvorrichtung eine Mehrzahl von Streifen aufweist, die jeweils einen annähernd kreisbogenförmigen Querschnitt aufweisen.

12. Kompressor einer axialen Doppelstrom-Turbomaschine mit einem Strömungsteiler für die Trennung des Luftstroms in einen Primär- und einen Sekundärstrom, wobei der Strömungsteiler einem der Ansprüche 1 bis 11 entspricht.

## Claims

1. Separator comprising a gas flow splitter nose of a double flow axial turbomachine, capable of splitting the gas flow into a primary flow and a secondary flow of the turbomachine, the separator comprising:
a separator leading edge (30); and
a leading edge de-icing device;
a surface heat exchanger (24); and
a guide wall (42) of the secondary flow;
**characterized in that**
the surface heat exchanger (24) is in the extension of the guide wall (42) of the secondary flow, and the de-icing device comprises at least a metal blade (38) in thermal contact with the leading edge (30) and extending from the leading edge to a rear end of the separator at some distance from leading edge (30), in thermal contact with the heat exchanger (24) forming a heat source located at some distance from the leading edge, the metal blade (38) having a longitudinal section generally in the shape of an "S".

2. Separator in accordance with Claim 1 **characterized in that** the thermal contact between the metal blade (38) and the leading edge (30) is provided by insertion of said blade in a slot within the separator and close to the leading edge.

3. Separator in accordance with one of Claims 1 and 2 **characterized in that** the separator comprises a guide wall (52, 54) of the primary flow, and the metal blade (38) is in contact with one of the guide walls (42, 52, 54) of the primary and secondary flows, respectively.

4. Separator in accordance with Claims 2 and 3 **characterized in that** the metal blade (38) is held in place by attaching its rear end (46) to the guide wall of the secondary flow (42).

5. Separator in accordance with one of Claims 1 to 3 **characterized in that** the metal blade (38) extends mainly along the guide wall (42) of the secondary flow, preferably with an insulating material (56) placed between the guide wall (42) and the metal blade (38).

6. Separator in accordance with Claim 5 **characterized in that** the metal blade (38) is made of a single piece with the leading edge (30) and the guide wall (42) of the secondary flow is fixed to the blade by the insulating material (56).

7. Separator in accordance with one of Claims 1 to 6 **characterized in that** the metal blade (38) has a straight front end and a straight rear end.

8. Separator in accordance with one of Claims 1 to 7 **characterized in that** the metal blade (38) is in contact with a rear end of the guide wall (42) of the secondary flow.

9. Separator in accordance with one of Claims 1 to 8 **characterized in that** the rear end (50) of the guide wall (42) of the secondary flow, the front end of the heat exchanger (24) and the rear end (46) of the blade (38) form a stacked assembly.

10. Separator in accordance with Claim 9 **characterized in that** the metal blade (38) comprises at least one female threaded member intended to mate with a bolt passing through the stacked assembly.

11. Separator in accordance with one of Claims 1 to 10 **characterized in that** the metal blade (38) has a cross section approximately circular or **in that** the de-icing device comprises a plurality of blades each having an approximately arcuate cross section.

12. Dual flow axial turbomachine compressor comprising a separator of the air flow into a primary and a secondary flow, the separator being in accordance with one of Claims 1 to 11.
